# EUROPÄISCHE PATENTSCHRIFT

(11) **EP 0 667 381 B1**
(45) Veröffentlichungstag und Bekanntmachung des Hinweises auf die Patenterteilung: **12.01.2000**
(21) Anmeldenummer: 95810056.2
(22) Anmeldetag: 31.01.1995
(51) Int. Cl.: C09D 163/00, C09D 5/03, C08G 59/20, C08G 59/68

(54) **Mit UV-Strahlen vernetzbare feste Epoxidharzzusammensetzungen**
Ultraviolet curable solid epoxy resin compositions
Compositions solides de résines époxydes réticulables par l'action des rayons UV

(30) Priorität: 09.02.1994 CH 38894
(43) Veröffentlichungstag der Anmeldung: 16.08.1995
(73) Patentinhaber: Ciba Specialty Chemicals Holding Inc., 4057 Basel (CH)
(72) Erfinder: Finter, Jürgen, Dr., D-79102 Freiburg (DE); Gottis, Philippe-Guilhaume, Dr., F-86200 Mulhouse (FR); Möckli, Alfred, CH-4058 Basel (CH)

(56) Entgegenhaltungen:
- EP-A- 0 286 594
- EP-A- 0 540 466
- EP-A- 0 620 259
- US-A- 4 593 051
- JOURNAL OF RADIATION CURING, Oktober 1986 Seiten 3-9, J.V. CRIVELLO ET AL.
- RADTECH EUROPE '93 MEDITERRANEO CONFERENCE PROCEEDINGS, 1993 FRIBOURG, CH, Seiten 533-544, M. WITTIG ET AL.
- DATABASE WPI Week 8823 Derwent Publications Ltd., London, GB; AN 88-158440 & JP-A-63 099 219 (THREE BOND KK) , 30.April 1988
- RESEARCH DISCLOSURE, Bd. 322, Nr. 32288, Februar 1991 EMSWORTH GB, Seite 129
- Kam Wu et al. Journal of Radiation Curing, Spring 1991, page 29

## Beschreibung

Die vorliegende Erfindung betrifft mit UV-Strahlen vernetzbare feste Zusammensetzungen auf Basis von festen oligomeren, kationisch polymerisierbaren Polyglycidylethern oder -estern, multifunktionellen nucleophilen Kettenübertragungsreagenzien und Photoinitiatoren für die kationische Polymerisation. Die neuen Epoxidharzzusammensetzungen finden vorzugsweise als Pulverlacke Anwendung.

Über die Härtung von Pulverlacken auf Basis von einen Photoinitiator enthaltenden Epoxidharzen durch Bestrahlung ausgelöste kationische Polymerisation wurde von M. Wittig et al. an der RADTECH Europe Conference, Mai 2.-6., 1993, Conference Proceedings, Seite 533-544 berichtet Sie bietet den Vorteil, dass feste Epoxidharze, die bei den gewünschten Temperaturen aufschmelzen, eingesetzt werden können. Im Vergleich zu der durch freie Radikale ausgelösten Polymerisation sind bei der durch Bestrahlung ausgelösten kationischen Polymerisation aber längere Härtungszeiten erforderlich, es müssen wegen der niedrigen Photoempfindlichkeit hohe Initiatorkonzentrationen eingesetzt werden, und die mechanischen Eigenschaften der ausgehärteten Beschichtungen lassen zu wünschen übrig.

Im Journal of Radiation Curing/Radiation Curing, Spring 1991, Seite 29-35, wird über die Verwendung von Lewis-Basen, wie zum Beispiel Pyridin, N-Vinylpyrrolidon oder N,N-Dimethylanilin, als Zusätze zu Photoinitiatoren und von Polyolen als Kettenübertragungsreagenzien bei der mittels UV-Strahlen ausgelösten kationischen Polymerisation von flüssigen Epoxidharzen berichtet und angegeben, dass beim Einsatz von Lewis-Basen eine Verlangsamung der Reaktionszeit beobachtet wird, die für eine Anwendung im Klebstoffbereich vorteilhaft sein kann.

Desgleichen werden im Journal of Radiation Curing, Oktober 1986, Seite 3-9, nur flüssige cycloaliphatische oder niederviskose aromatische Epoxidharze zur Untersuchung des Einflusses von Polyolen als Kettenübertragungsreagenz bei der durch UV-Strahlen initiierten kationischen Polymerisation von Epoxidharzen eingesetzt.

In Technical Paper FC85-417 der Radcure Europe 85 Conference, May 6.-8., 1985, wird die kationische Photopolymerisation von Diglycidylethern unterschiedlichen Molekulargewichtes, wie sie durch Advancement-Reaktion von Bisphenol A-diglycidylether mit Bisphenol A erhalten werden, mit Eisen-Aren-Salzen als kationische Photoinitiatoren beschrieben und berichtet, dass das Molekulargewicht der Diglycidylether keinen Einfluss auf den Umsetzungsgrad bei der Photopolymerisation hat, und dass die Glasumwandlungstemperaturen der photovernetzten Diglycidylether umso niedriger sind, je höher das Molekulargewicht der eingesetzten Diglycidylether ist. Man kann daraus folgern, dass die sekundären Hydroxylgruppen der vorverlängerten Diglycidylether nicht an der kationischen Photopolymerisation teilnehmen.

Es besteht ein Bedarf nach Pulverlacken, die bei Temperaturen unter 130°C einen guten Verlauf zeigen, eine gute Reaktivität und gleichzeitig eine hohe Lagerstabilität aufweisen. Mit thermisch vernetzenden Epoxidharzpulverlacken werden diese Eigenschaften nicht erreicht, da bei tieferer Temperatur ablaufende Vernetzungsreaktionen grössere Mengen an Härtungsmitteln erforderlich sind, wobei die Glasumwandlungstemperatur (T_{G}) der härtbaren Epoxidharzzusammensetzung so erniedrigt wird, dass die Lagerstabilität sich verringert.

Überraschend wurde nun gefunden, dass feste Epoxidharze, die eine T_{G} von grösser als 40°C aufweisen, mit kationischen Photoinitiatoren, wie beispielsweise Sulphoniumsalzen, in Gegenwart von geringen Mengen an Kettenübertragungsreagenzien, die kein Stickstoffatom im Molekül enthalten, mittels UV-Strahlen zu bedeutend höheren Umsätzen polymerisiert werden können, dass die dabei erhaltenen Produkte hohe T_{G}-Werte aufweisen und dass solche festen Epoxidharzzusammensetzungen vorteilhaft als Pulverlacke verwendet werden können.

Gegenstand vorliegender Erfindung sind somit feste Zusammensetzungen, bestehend aus
(a) einem festen oligomeren, kationisch polymerisierbaren Polyglycidylether oder -ester, wobei der oligomere Polyglycidylether oder -ester eine Glasumwandlungstemperatur (T_{G}) von grösser als 40°C aufweisen,
(b) einem primären aliphatischen Polyol als einem multifunktionellen nucleophilen Kettenübertragungsreagenz,
(c) 0,05 bis 3 Gew.-%, bezogen auf die Komponente (a), eines Photoinitiators für die kationische Polymerisation und gegebenenfalls
(d) üblichen Zusätzen für Pulverlacke, wobei die Zusammensetzungen frei von ein primäres, sekundäres oder tertiäres Sticktoffatom enthaltenden Verbindungen sind oder solche Verbindungen höchstens in einer Menge von 50 Mol%, bezogen auf die Menge der Komponente (c), enthalten.

Vorzugsweise sind die erfindungsgemässen Zusammensetzungen frei von Verbindungen, die im Molekül ein primäres, sekundäres oder tertiäres Sticktoffatom enthalten.

Für die Mischungskomponente (a) können als feste oligomere Polyglycidylether beispielsweise die durch Umsetzung von zweiwertigen Phenolen, wie Bisphenolen, mit Epichlorhydrin nach dem sogenannten Taffy-Verfahren erhaltenen Diglycidylether oder die durch Advancementreaktion von Diglycidylethern zweiwertiger Phenolen, wie Bisphenoldiglycidylether, mit einem Vorverlängerungsmittel, beispielsweise einem zweiwertigen Phenol, wie Bisphenol A, erhaltenen vorverlängerten Diglycidylether eingesetzt werden.

Als Glycidylether, die mittels des Advancementverfahrens in oligomere Glycidylverbindungen umgewandelt werden können, seien beispielsweise die Glycidylether von einkernigen Phenolen, wie Resorcin oder Hydrochinon, oder die von mehrkernigen Phenolen, wie Bis-(4-hydroxyphenyl)-methan, 4,4'-Dihydroxybiphenyl, Bis-(4-hydroxyphenyl)-sulfon, 2,2-Bis-(4-hydroxyphenyl)-propan oder 2,2-Bis-(3,5-dibrom-4-hydroxyphenyl)-propan genannt.

Als feste oligomere Polyglycidylether eignen sich für die erfindungsgemässen Zusammensetzungen auch die Epoxynovolake, die bekanntlich durch Umsetzung von Novolaken mit Epichlorhydrin oder β-Methylepichlorhydrin unter alkalischen Bedingungen, oder in Anwesenheit eines sauren Katalysators und anschliessende Alkalibehandlung erhältlich sind. Novolake sind bekanntlich Kondensationsprodukte aus Aldehyden, wie Formaldehyd, Acetaldehyd, Chloral oder Furfuraldehyd, und Phenolen, wie Phenol oder solchen, die im Kern mit Chloratomen oder C₁-C₉-Alkylgruppen substituiert sind, wie beispielsweise 4-Chlorphenol, 2-Methylphenol oder 4-tert.-Butylphenol.

Als feste oligomere Polyglycidylester eignen sich für die erfindungsgemässen Zusammensetzungen die ebenfalls nach dem Taffy-Verfahren oder Advancement-verfahren aus monomeren Polyglycidylestern hergestellten oligomeren Polyglycidylester. Beispielsweise können dafür Glycidylester von aliphatischen Polycarbonsäuren, wie Bemsteinsäure, Adipinsäure oder Sebacinsäure, von cycloaliphatischen Polycarbonsäuren, wie beispielsweise Hexahydrophthalsäure, Hexahydroterephthalsäure, Hexahydroisophthalsäure oder 4-Methylhexahydrophthalsäure, oder von aromatischen Polycarbonsäuren, wie beispielsweise Phthalsäure, Isophthalsäure oder Terephthalsäure, eingesetzt werden.

Vorzugsweise enthalten die erfindungsgemässen Epoxidharzzusammensetzungen als Mischungskomponente (a) feste oligomere Polyglycidylether oder -ester oder feste Epoxyphenol- oder Epoxycresolnovolake.

Insbesondere enthalten die erfindungsgemässen Epoxidharzzusammensetzungen feste oligomere Polyglycidylether.

Als multifunktionelles nucleophiles Kettenübertragungsreagenz (b) enthalten die erfindungsgemässen Epoxidharzzusammensetzungen mehrwertige primäre aliphatische Alkohole. Die Kettenübertragungsreagenzien können gegebenenfalls in einem Reaktivverdünner, wie beispielsweise 4-Butyrolacton, 1,2-Propylencarbonat oder cyclische Acetale, wie beispielsweise Dioxolan, gelöst sein.

Geeignete primäre aliphatische Alkohole als multifunktionelles nucleophiles Kettenübertragungsreagenz (b) sind alle Verbindungen, die mindestens eine, vorzugsweise mindestens zwei primäre aliphatische Hydroxylgruppen im Molekül aufweisen, wie beispielsweise Ethylenglykol, Polyethylenglykole mit einem Polymerisationsgrad von 2 bis kleiner als 1000, Polyethylenoxid-Polypropylenoxid-Polyethylenoxid-Blockcopolymer, Neopentylglykol, 2-Ethyl-2'-propylpropandiol-1,3,Hydroxypivalylhydroxypivalat, Butandiol-1,4, Hexandiol-1,6, 3(4),8(9)-Bis-(hydroxymethyl)tricyclo[5.2.1.0^{2,6}]-decan, 1,1,1-Trihydroxymethylpropan, Bis-(2-hydroxyethylhydrochinon)-ether, Hydroxylendgruppen aufweisende Polyester mit einer Hydroxylzahl kleiner als 110 mg KOH/g, β-Hydroxyether, deren sekundären Hydroxylgruppen mit ε-Caprolacton gepfropft sind, oder Reaktionsprodukte aus einem mehrwertigen Alkohol mit ε-Caprolacton.

Im allgemeinen verwendet man die multifunktionellen nucleophilen Kettenübertragungsreagenzien in solchen Mengen, dass pro 1 Äquivalent Glycidylgruppe bis zu 1 Äquivalent der funktionellen Gruppen des Kettenübertragungsreagenz vorliegen. Vorzugsweise beträgt das Verhältnis von funktioneller Gruppe des Kettenübertragungsreagenz, beispielsweise Hydroxylgruppe, zur Glycidylgruppe von 0,05 bis 0,8.

Photoinitiatoren für die kationische Polymerisation, beispielsweise Oniumsalze, die als Komponente (c) in den erfindungsgemässen Epoxidharzzusammensetzungen verwendet werden, sind bekannt, beispielsweise aus den EP-A 0 297 442 und 0 580 552.

Die erfindungsgemässen Zusammensetzungen enthalten die Photoinitiatoren für die kationische Polymerisation im allgemeinen in Mengen von 0,05 bis 3 Gew.-%, bezogen auf die Epoxidharzkomponente (a).

Gegebenenfalls können die erfindungsgemässen Zusammensetzungen zusätzlich auch noch Sensibilisatoren, wie Anthracen, Anthracenderivate, Perylen oder andere mehrkernige Aromaten, enthalten.

Vorzugsweise enthalten die erfindungsgemässen Epoxidharzzusammensetzungen als kationische Photoinitiatoren Sulfoniumsalze, insbesondere ein Sulfoniumsalz der Formel I 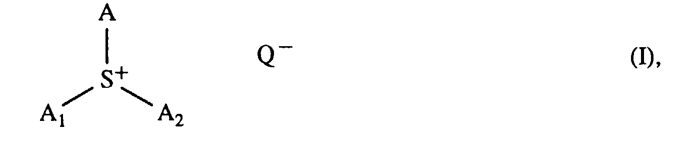 worin A, A₁ und A₂ gleiche oder verschiedene aliphatische, cycloaliphatische oder aromatische Reste darstellen, die gegebenenfalls einfach oder mehrfach substituiert sind und Heteroatome enthalten können, und wobei zwei der Reste A, A₁ und A₂ zu einem Ring oder Ringgebilde verknüpft sein können, und Q⁻ für ein komplexes Anion, wie beispielsweise BF₄⁻, FeCl₄⁻, PF₆⁻, SbF₆⁻, AsF₆⁻ SnCl₆⁻, SbCl₆⁻, BiCl₅⁻ oder SbF₅OH⁻, steht.

In der Formel I können A, A₁ und A₂ beispielsweise je für ein unsubstituiertes oder durch Halogen substituiertes C₁-C₁₂-Alkyl, wie zum Beispiel Methyl, Ethyl, n-Propyl, tert.-Butyl oder 4-Chlorbutyl, für einen cycloaliphatischen Rest, wie zum Beispiel Cyclohexyl oder Cyclopentyl, die gegebenenfalls durch Alkyl, Alkoxy oder Halogenatome substituiert sein können, für einen unsubstituierten oder durch Alkyl, Alkoxy, Phenylthio oder Halogenatome substituierten aromatischen Rest, wie zum Beispiel Phenyl, Naphthyl, Methylphenyl, Methoxyphenyl, Chlorphenyl, Bromphenyl, Dichlorphenyl, Dimethylphenyl, stehen oder zwei der Reste A, A₁ und A₂ können miteinander zu einem Ring, wie zum Beispiel Tetramethylen oder Pentamethylen, oder einem Ringgebilde, wie zum Beispiel 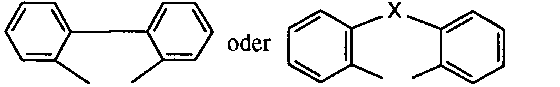 verbunden sein, worin X für -O-, -CH₂-, -NH-, -CO-, -CH₂-CH₂- oder -S- steht.

Für die Erfindung ganz besonders bevorzugt werden die aromatischen Sulfoniumsalze, inbesondere ein unsubstituiertes oder mit Phenylthiogruppen substituiertes Triarylsulfoniumhexafluorophosphat oder -antimonat.

Neben diesen genannten Photoinitiatoren sind auch übliche kationische Photoinitiatoren geeignet, wie beispielsweise Aryljodoniumsalze mit nicht nucleophilen Gegenionen, wie BF₄⁻, PF₆⁻, SbF₆⁻ oder die in EP-A-562 897 beschriebenen Systeme. Eine Übersicht über mögliche, zur kationischen Polymerisation von Epoxidharzen geeignete Photoinitiatoren wird von R.S. Davidson im Journal of Photochem. Photobiol. A; Chem, 73 (1993), Seite 81 bis 96, angegeben.

Als übliche Zusätze für Pulverlacke (d), die gegebenenfalls in den erfindungsgemässen Zusammensetzungen enthalten sein können, seien beispielsweise Farbstoffe, Pigmente, wie vorzugsweise TiO₂, Entgasungsmittel, vorzugsweise Benzoin, Verlaufsmittel, beispielsweise Polyvinylacetale, wie Polyvinylbutyral (Movital®B 30 der Firma HOECHST), Polyethylenglykol, Glycerin, Acryl-Mischpolymerisate, wie Modaflow® oder Acrylon®MFP der Firmen MONSANTO bzw. PROTEX, Antikratermittel oder Füllstoffe, insbesondere mineralische Füllstoffe, wie Quarzmehl oder Baryt (Bariumsulfat), genannt.

Bei Verbindungen, die ein primäres, sekundäres oder tertiäres Stickstoffatom im Molekül enthalten, kann es sich beispielsweise um ein katalytisches Härtungsmittel oder um einen Beschleuniger, welche der erfindungsgemässen Zusammensetzung zugefügt wird, oder um Verunreinigungen in den Komponenten (a), (b) oder (d) handeln, insbesondere um Katalysatorreste in den Verbindungen der Komponente (a), vor allem in den oligomeren Polyglycidylethern oder -estern, die Advancement-Harze darstellen. Solche Verunreinigungen bzw. Katalysatorreste, wie tertiäre Amine, beispielsweise Imidazole, wie 2-Methylimidazol, N-Benzyldimethylamin oder 2,4,6-Tris-(dimethylaminoethyl)-phenol, dürfen in den erfindungsgemässen Zusammensetzungen nur in solchen Mengen vorhanden sein, dass ihre molare Konzentration höchstens die Hälfte der molaren Konzentration des in den erfindungsgemässen Zusammensetzungen enthaltenen Photoinitiators (c) beträgt.

Die Herstellung der pulverförmigen Zusammensetzung kann durch Mischen der Mischungskomponenten in der Schmelze, vorzugsweise in einer Spritzgiessmaschine, wie beispielsweise in einem Buss-Kokneter, bei Temperaturen zwischen 70°C und 200°C und Zerkleinern der abgekühlten Masse oder durch Homogenisieren der Mischungskomponenten unter hohen Scherkräften bei Temperaturen unterhalb von 120 °C, beispielsweise in einer Kugelmühle erfolgen.

Die erfindungsgemässen Epoxidharzzusammensetzungen stellen unter Lichtausschluss lagerstabile Gemische dar, deren Vernetzungsreaktion erst durch Licht initiiert wird. Vor der photoinduzierten kationischen Polymerisation der erfindungsgemässen Epoxidharzzusammensetzungen können diese bei erhöhter Temperatur, etwa 90 bis 180°C, aufgeschmolzen werden, ohne dass deren Latenz verloren geht.

Wie eingangs erwähnt, finden die erfindungsgemässen Epoxidharzzusammensetzungen vorzugsweise als Pulverlacke Anwendung. Sie können zweckmässig auf Teilchengrössen von kleiner als 100 µm mechanisch gemahlen werden und nach Tribo- oder Koronaaufladung auf dem zu beschichtenden Teil in einer homogenen Schicht elektrostatisch abgeschieden werden. Die Pulverschicht wird dann durch Erwärmung entweder in einem Umluftofen oder durch Strahlungswärme, wie kurzwellige oder mittelwellige Infrarotstrahlung, aufgeschmolzen.

Die Vernetzungsreaktion wird durch Bestrahlung der aufgeschmolzenen Schicht mit aktinischer Strahlung bewirkt. Für die Bestrahlung können an sich beliebige geeignete Lichtquellen eingesetzt werden, die im Wellenlängenbereich von 300-400 nm genügend intensive Strahlung emittieren, beispielsweise Xenonlampen, Metallhalogenidlampen, UV-Argonlaser, frequenzverdoppelte Helium-Neon-Laser und besonders Quecksilberhochdruck-, Quecksilber-Xenon- und Quecksilbermitteldrucklampen. Auch Elektronenstrahlung kann für die Vernetzungsreaktion verwendet werden.

Vorzugsweise wird die aufgeschmolzene Schicht im Schmelzzustand bei erhöhter Temperatur bestrahlt. Es ist aber auch möglich, die aufgeschmolzene Schicht durch Abkühlung glasartig erstarren zu lassen, durch Belichtung zu vernetzen und durch thermische Nachbehandlung bei Temperaturen von beispielsweise über 90°C vollständig ausreagieren zu lassen.

Die Bestrahlung kann auch durch eine Maske bildmässig erfolgen. Werden die unbelichteten und unreagierten Bildteile beispielsweise durch Eintauchen in ein Lösungsmittel entfernt, so wird ein Reliefbild erhalten, das beispielsweise als Photoresist verwendet werden kann.

Die erfindungsgemässen Epoxidharzzusammensetzungen eignen sich auch zur Beschichtung von wärmeempfindlichen Substraten, wie Kunststoffe, Holz oder Papier, oder auch zur Herstellung von dreidimensionalen Formkörpern durch Bestrahlen der erfindungsgemässen Epoxidharzzusammensetzungen mit einem Abtast-Laser im Wirbelbett. Die erfindungsgemässen Epoxidharzzusammensetzungen können als Pulver auch im Trockensiebdruck eingesetzt werden. Das Trockensiebdruckverfahren sowie die Vorrichtung zu seiner Durchführung werden beispielsweise in der PCT-Anmeldung WO 92/03295 näher beschrieben.

### Beispiel 1

29,66 g eines festen, mit Bisphenol A vorverlängerten Bisphenol A-diglycidylethers mit einem Epoxidgehalt von 1,3 Äquivalenten/kg werden unter Rühren aufgeschmolzen. Bei 160 °C wird die Schmelze mit 0,337 g Triethylenglykol versetzt und 2 Minuten lang gerührt. Dann werden 0,3 g der Photoinitiatorlösung UV-I 6974® (Gemisch eines Triarylsulphoniumhexafluoroantimonat in Propylencarbonat, Hersteller Firma Union Carbide) zugefügt. Die Schmelze wird dann durch Ausgiessen auf eine Stahlplatte abgeschreckt und nach dem Abkühlen auf Raumtemperatur gemahlen. Das Verhältnis von Hydroxyl- zu Glycidylgruppen sowie die Menge des Initiators im hergestellten Pulver sind in Tabelle 1 angegeben.

### Beispiele 2-11

Beispiel 1 wird wiederholt, wobei das Epoxidharz und das Triethylenglykol in anderen Mischungsverhältnissen eingesetzt werden oder ein anderes Polyol verwendet wird. Das Verhältnis von Hydroxyl- zu Glycidylgruppen sowie die Menge des Initiators in den hergestellten Pulvern sind in Tabelle 1 angegeben.

**Tabelle 1:**

| Pulverlacke aus einem vorverlängerten Bisphenol A-diglycidylether, einem Polyol und einem Photoinitiator | | | | | |
|---|---|---|---|---|---|
| | | | | Hydroxyl | |
| Beispiel | Polyol Typ | Epoxidharz [g] | Polyol [g] | Glycidyl [Äquivalent] | Initiator [Gew.-%] |
| 1 | A | 29,66 | 0,34 | 0,10 | 1 |
| 2 | A | 27,22 | 2,78 | 0,50 | 1 |
| 3 | A | 28,75 | 1,26 | 0,30 | 0,25 |
| 4 | B | 27,57 | 2,50 | 0,40 | 1 |
| 5 | C | 27,71 | 2,39 | 0,20 | 1 |
| 6 | D | 28,28 | 1,71 | 0,50 | 0,5 |
| 7 | D | 28,86 | 1,18 | 0,40 | 0,5 |
| 8 | E | 27,525 | 2,48 | 0,50 | 0,5 |
| 9 | F | 19,88 | 10,22 | 0,40 | 1 |
| 10 | F | 17,08 | 13,00 | 0.50 | 1 |
| 11 | F | 49,89 | 9,43 | 0,20 | 0,5 |

| | | | | | |
|---|---|---|---|---|---|
| A = Triethylenglykol | | | | | |
| B = Bis-(2-hydroxyethylhydrochinon)-ether | | | | | |
| C = CAPA 316® (Reaktionsprodukt aus einem mehrwertigen Alkohol und ε-Caprolacton der Firma Solvay) | | | | | |
| D = 1,1,1 -Trihydroxymethylpropan | | | | | |
| E = 2',2-Methylpropyl-1,3-propandiol | | | | | |
| F = Hydroxylendgruppen aufweisender Polyester aus Terephthalsäure und Neopentylglykol (OH-Zahl = 100 mg KOH/g; MG =3600, gemessen durch GPC mit Polystyrol-Standards) | | | | | |

### Beispiel 12

Aus 5 g Photoinitiatorlösung gemäss Beispiel 1 und 95 g eines festen, mit Bisphenol A vorverlängerten Bisphenol A-diglycidylethers mit einem Epoxidgehalt von 1,3 Äquivalenten/kg wird ein Masterbatch durch Mischen der Komponenten in der Schmelze bei 175 °C während 5 Minuten und nachfolgendem Abschrecken durch Ausgiessen auf ein Stahlblech hergestellt. 12 g dieses Masterbatchs werden mit 37,49 g eines festen, mit Bisphenol A vorverlängerten Bisphenol A-diglycidylethers mit einem Epoxidäquivalentgewicht von 735 sowie 9,43 g eines Hydroxylendgruppen aufweisenden Polyesters mit einer Hydroxylzahl von 100 mg KOH/g, hergestellt aus Terephthalsäure und Neopentylglykol, in einer Kugelmühle gemahlen und in einem Schmelzmischer durch Extrusion bei 135°C homogenisiert.

### Beispiele 13 und 14

600 g eines festen mit Bisphenol A vorverlängerten Bisphenol A-diglycidylethers mit einem Epoxidäquivalentgewicht von 585 werden unter Rühren aufgeschmolzen. Bei 160°C wird die Schmelze mit 8,55 g Triethylenglykol versetzt, nach 2 min Rühren werden 30 g Photoinitiatorlösung UV-I6974® sowie 30 g 2-Methylanthracen als Sensibilsator zugefügt. Die Schmelze wird abgeschreckt und nach Abkühlen auf Raumtemperatur gemahlen.

Beispiel 14 wird analog durchgeführt. Die Mischungsverhältnisse sind in Tabelle 4 wiedergegeben.

**Tabelle 2 :**

| Pulverlacke enthaltend 2-Methylanthracen als Sensibilisator | | | |
|---|---|---|---|
| Beispiele | Val OH-Gruppen | Photoinitiator [Gew.-%] | 2-Methylanthracen [Gew.-%] |
| 13 | 10 % | 0,5 | 0,5 |
| 14 | 20 % | 0,25 | 0,15 |

### Beispiel 15 bis 17

In analoger Weise wie in Beispiel 13 werden Pulverlacke mit 4-Octyloxophenylphenyliodonium-hexafluoroantimonat(OPHA), dessen Herstellung im US-Patent 4 992 571 beschrieben wird, als Photointiator sowie mit Arylsulfoniumhexafluorophosphat, das unter der Bezeichnung KI-85 von Degussa im Handel erhältlich ist, als Photoinitiator hergestellt. Das feste Epoxidharz hat das Epoxidäquivalentgewicht von 685, und als Kettenübertragungsreagenz wird jeweils Triethylenglykol verwendet.

**Tabelle 3:**

| Pulverlacke mit verschiedenen Photoinitiatoren | | | |
|---|---|---|---|
| Beispiel | Val OH-Gruppen | Photoinitiator Typ | Photoinitiator [Gew.-%] |
| | | | |
| 15 | 10 | OPHA | 3 |
| 16 | 15 | KI-85 | 3 |
| 17 | 20 | UV-I 6974®/KI-85*⁾ | 1.5 |

| | | | |
|---|---|---|---|
| *⁾ Mischungsverhältnis 1:1 Gewichtsteile. | | | |

### Applikationsbeispiele

### a) Photoreaktivitäten

Die Reaktivität der in den Beispielen 1 bis 11 erhaltenen Pulver kann mit der Photo-DSC-Methode bestimmt werden. Die Probe wird hierbei auf eine vorgewählte Temperatur aufgeheizt und dann isotherm mit UV-Licht belichtet. Die Reaktionswärme, hervorgerufen durch die einsetzende Vernetzungsreaktion, ist ein Mass für die Vollständigkeit der Reaktion. Bei Belichtungstemperaturen < 110°C kann eine thermische Nachpolymerisation erforderlich sein.
Die Resultate werden in Tabelle 4 angegeben.

**Tabelle 4:**

| Reaktivität der Pulverlacke, gemessen mit der Photo-DSC-Methode | | | | |
|---|---|---|---|---|
| Pulver nach Beispiel | Reaktionsenthalpie bei isothermer Belichtung [KJ/Äquivalent Glycidylgruppe] Tᵢₛₒ : | | | T_{G}*⁾ [°C] |
| | 60°C | 90°C | 110°C | |
| 1 | 69,4 | 99,5 | 125,1 | 111 |
| 2 | 92,3 | 100,7 | 118,7 | 65 |
| 3 | 63,8 | 81,6 | 84 | 86 |
| 4 | 82 | 96,4 | 114,4 | 81 |
| 5 | 59,5 | 102,2 | 82,3 | 86,3 |
| 6 | 60,9 | 103 | 102,8 | 98 |
| 7 | 58,5 | 103,2 | 118 | 99,8 |
| 8 | 61,6 | 98,7 | 105,4 | 73 |
| 9 | 72,5 | 108,1 | 117 | 97 |
| 10 | 53,7 | 98 | 106,7 | 88 |
| 11 | 19,5 | 78,7 | 86 | 107 |

| | | | | |
|---|---|---|---|---|
| *⁾ T_{G}-Wert des vollständig vernetzten Pulverlackes, gemessen im DSC bei 20°C/min Aufheizrate | | | | |

Von den in den Beispielen 13 und 14 hergestellten Pulvern wird deren Reaktivität mittels der Photo-DSC-Methode bestimmt. Das Pulver wird hierbei auf eine vorgewählte Temperatur aufgeheizt und dann isotherm mit UV-Licht belichtet. Die bei der einsetzende Vernetzungsreaktion entstehende Reaktionswärme (Reaktionsenthalpie) ist ein Mass für die Vollständigkeit der Reaktion.
Die erhaltenen Resultate werden in Tabelle 5 wiedergegeben.

**Tabelle 5:**

| Reaktionsenthalpie einiger Pulverlacke | | | |
|---|---|---|---|
| Pulver nach Beispiel | Belichtungstemperatur [°C] | Reaktionsenthalpie [kJ/Val Epoxid] | T_{G} [°C] |
| 13 | 90 | 93 | 105 |
| 14 | 90 | 95 | 110 |

### b) Pulverbeschichtungen

### 1.) Aufschmelzen und Belichten auf einer Heizplatte:

Durch Schmelzen oder Extrudieren erhaltene feste Mischungen werden grob zerkleinert, in einer Stiftmühle gemahlen und gesiebt. Eine Pulverfraktion mit Korndurchmesser <100 µm wird elektrostatisch auf Stahlplatten gesprüht, in einem IR-Durchlaufofen (max. Oberflächentemperatur 140°C, Durchlaufzeit 60 sek) aufgeschmolzen und in einem nachfolgenden UV-Durchlaufbelichter (I=50 mW/cm², Durchlaufzeit 8 m/min) vernetzt. Das Ausmass der photochemisch induzierten Vernetzung kann mittels Belichtung durch einen Graukeil (21-step Resolution Guide, Fa. Stauffer) und nachfolgende Entwicklung mit einem Lösungsmittel bestimmt werden.

Für einen Pulverlack nach Beispiel 1 wird so auf Stahlplatten eine klare glänzende Beschichtung mit 65 µm Dicke, reverse impact >20 cm/kg und Härte 2H erhalten. Auf vorgewärmten (70°C) MDF-Platten (MDF=mitteldichte Faserplatte) wird ein klarer harter Überzug erhalten.

Eine Pulverfraktion mit Korndurchmesser <100 µm wird elektrostatisch auf Aluminiumplatten gesprüht. Die folgende Tabelle 9 zeigt die Resultate für pulverbeschichtete Aluminiumplatten, die isotherm auf einer Heizplatte mit einer Quecksilberleuchte (Oriel Photoresist Illuminator) mit 28,4 mWcm⁻² Ausgangsleistung im UV-A (gemessen mit Goldilux Photometer mit UV-A Sensor, Vertrieb Oriel) erhalten werden. Zur Bestimmung der Photoempfindlichkeit wurde durch einen Graukeil (Stauffer 21-Step Resolution Guide) belichtet. Schlagtests werden mit einem Byk Schlagtester mit 2 kg Gewicht an Platten durchgeführt, die bis Stufe 7 durchgehärtet waren.

**Tabelle 6:**

| Schlagtestergebnisse | | | |
|---|---|---|---|
| Pulver nach Beispiel | Temperatur [°C] | Belichtungsenergie [mJcm⁻²] | Schlagtest [kg·cm] |
| 13 | 90 | 700 | 30 |
| 14 | 110 | 650 | 40 |

### 2.) Aufschmelzen im IR, Vernetzen mit UV in einer Durchlaufanlage:

Pulverbeschichtete Platten werden in einem IR-Durchlaufofen mit 2 mittelwelligen IR-Strahlern (25·25 cm; 32 kW/m² und 19,2 kW/m² Ausgangsleistung im Abstand von 15 cm) aufgeschmolzen und unmittelbar nachfolgend in einem nachfolgenden UV-Labordurchlaufbelichter (LC 6 mit F-300 Fusionslampe; Leistung = 80 mW/cm; Hersteller: Fusion Systems) mit 5 m/min Bandgeschwindigkeit vernetzt. An den beschichteten Platten werden die Schlagtests mit einem Byk Schlagtester mit 2 kg Gewicht durchgeführt. Die Resultate sind in Tabelle 7 angegeben.

**Tabelle 7:**

| Schlagtestergebnisse | | | |
|---|---|---|---|
| Pulver nach Beispiel | Bandgeschwindigkeit der IR-Linie [m/min] | Zahl der UV-Durchläufe | Schlagtest [kg·cm] |
| 13 | 2 | 1 | 30 |
| 14 | 1,5 | 1 | 40 |
| 15 | 2 | 3 | 30 |
| 16 | 1,5 | 2 | 20 |
| 17 | 2 | 2 | 25 |

## Patentansprüche

1. Feste Zusammensetzungen, bestehend aus
(a) einem festen oligomeren, kationisch polymerisierbaren Polyglycidylether oder -ester, wobei der oligomere Polyglycidylether oder -ester eine Glasumwandlungstemperatur (T_{G}) von grösser als 40°C aufweisen,
(b) einem primären aliphatischen Polyol als einem multifunktionellen nucleophilen Kettenübertragungsreagenz,
(c) 0,05 bis 3 Gew.-%, bezogen auf die Komponente (a), eines Photoinitiators für die kationische Polymerisation und gegebenenfalls
(d) üblichen Zusätzen für Pulverlacke, wobei die Zusammensetzungen frei von ein primäres, sekundäres oder tertiäres Sticktoffatom enthaltenden Verbindungen sind oder solche Verbindungen höchstens in einer Menge von 50 Mol%, bezogen auf die Menge der Komponente (c), enthalten.

2. Zusammensetzungen gemäss Anspruch 1, dadurch gekennzeichnet, dass sie frei von Verbindungen sind, die im Molekül ein primäres, sekundäres oder tertiäres Sticktoffatom enthalten.

3. Zusammensetzungen gemäss Anspruch 1, dadurch gekennzeichnet, dass sie als Komponente (a) einen festen oligomeren Polyglycidylether oder -ester oder ein festes Epoxyphenol- oder Epoxycresolnovolak enthalten.

4. Zusammensetzungen gemäss Anspruch 1, dadurch gekennzeichnet, dass sie als Komponente (a) einen festen oligomeren Polyglycidylether enthalten.

5. Zusammensetzungen gemäss Anspruch 1, dadurch gekennzeichnet, dass sie als Komponente (c) ein Sulfoniumsalz enthalten.

6. Zusammensetzungen gemäss Anspruch 1, dadurch gekennzeichnet, dass sie als Komponente (c) ein Triarylsulfoniumsalz enthalten.

7. Zusammensetzungen gemäss Anspruch 1, dadurch gekennzeichnet, dass sie als Komponente (c) ein Triarylsulfoniumhexafluorophosphat oder -antimonat enthalten.

8. Verwendung der Zusammensetzungen gemäss Anspruch 1 als Pulverlack.

9. Vernetzte Beschichtung, die erhalten wird, indem man ein Pulver aus einer festen Zusammensetzung gemäss Anspruch 1 elektrostatisch auf eine Unterlage aufsprüht, die Beschichtung durch Wärmezufuhr aufschmilzt und durch UV-Strahlung vernetzt.

10. Beschichtung gemäss Anspruch 10, dadurch gekennzeichnet, dass die Wärmezufuhr durch IR-Strahlung erfolgt.

## Claims

1. A solid composition, which comprises
(a) a solid oligomeric, cationically polymerisable polyglycidyl ether or polyglycidyl ester, said oligomeric polyglycidyl ether or polyglycidyl ester having a glass transition temperature (T_{G}) higher than 40°C,
(b) a primary aliphatic polyol as a multifunctional nucleophilic chain transfer agent,
(c) 0.05 to 3% by weight, based on component (a), of a photoinitiator for the cationic polymerisation and, as optional components,
(d) customary additives for powder coating compositions, which compositions are free from compounds containing a primary, secondary or tertiary nitrogen atom or contain such compounds only in an amount which at most is 50 mol % of the amount of component (c).

2. A composition according to claim 1, which is free from compounds containing a primary, secondary or tertiary nitrogen atom in the molecule.

3. A composition according to claim 1, wherein component (a) is a solid oligomeric polyglycidyl ether or polyglycidyl ester or a solid epoxy-phenol novolak or epoxy-cresol novolak.

4. A composition according to claim 1, wherein component (a) is a solid oligomeric polyglycidyl ether.

5. A composition according to claim 1, wherein component (b) is a sulfonium salt.

6. A composition according to claim 1, wherein component (c) is a triarylsulfonium salt.

7. A composition according to claim 1, wherein component (c) is a triarylsulfonium hexafluorophosphate or a triarylsulfonium hexafluoroantimonate.

8. Use of the composition according to claim 1 as powder coating composition.

9. A crosslinked coating which is obtained by electrostatically spraying a powder consisting of a solid composition according to claim 1 onto a substrate, fusing the coating by applying heat and subsequently effecting crosslinking by UV radiation.

10. A coating according to claim 9, wherein heating is effected by IR radiation.

## Revendications

1. Compositions solides constituées par
(a) un éther ou ester polyglycidylique solide oligomère polymérisable cationiquement, l'éther ou l'ester polyglycidylique oligomère présentant une température de transition vitreuse (T_{G}) supérieure à 40°C,
(b) un polyol aliphatique primaire en tant que réactif de transfert de chaîne nucléophile multi-fonctionnel,
(c) de 0,05 à 3% en masse, par rapport au constituant (a), d'un photoamorceur de polymérisation cationique, et éventuellement
(d) des matières d'addition usuelles pour des laques en poudre, les compositions étant exemptes de composés contenant un atome d'azote primaire, secondaire ou tertiaire, ou contenant de tels composés dans une quantité maximale de 50% en moles, par rapport à la quantité du constituant (C).

2. Compositions selon la revendication 1, caractérisées en ce qu'elles sont exemptes de composés contenant un atome d'azote primaire, secondaire ou tertiaire dans la molécule.

3. Compositions selon la revendication 1, caractérisées en ce qu'elles contiennent, en tant que constituant (a), un éther ou ester polyglycidylique oligomère solide ou une époxyphénol- ou époxycrésolnovolaque solide.

4. Compositions selon la revendication 1, caractérisées en ce qu'elles contiennent, en tant que constituant (a), un éther polyglycidylique oligomère solide.

5. Compositions selon la revendication 1, caractérisées en ce qu'elles contiennent, en tant que constituant (c), un sel de sulfonium.

6. Compositions selon la revendication 1, caractérisées en ce qu'elles contiennent, en tant que constituant (c), un sel de triarylsulfonium.

7. Compositions selon la revendication 1, caractérisées en ce qu'elles contiennent, en tant que constituant (c), un hexafluorophosphate ou hexafluoroantimoniate de triarylsulfonium.

8. Utilisation des compositions selon la revendication 1 en tant que laque en poudre.

9. Revêtement réticulé, que l'on obtient par pulvérisation électrostatique d'une poudre d'une composition solide selon la revendication 1 sur un subjectile, par fusion du revêtement par un apport de chaleur et par réticulation par du rayonnement UV.

10. Revêtement selon la revendication 10, caractérisé en ce que l'apport de chaleur est réalisé par irradiation par du rayonnement IR.
